# EUROPEAN PATENT APPLICATION

(11) **EP 4 745 784 A1**
(43) Date of publication of application: **20.05.2026**
(21) Application number: 24275124.6
(22) Date of filing: 14.11.2024
(51) Int. Cl.: G06F 11/3668, G06N 20/00

(54) **FUZZ TESTING AUTONOMOUS SYSTEMS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A computer-implemented method is disclosed, in which a Large Language Model, LLM, is used to score or rank a plurality of test cases for use in fuzz testing an autonomous system. The method comprises: receiving a definition of interestingness and a plurality of test cases; providing the definition of interestingness and the plurality of test cases to the LLM in the form of first input text and second input text, respectively; and receiving an output from the LLM. The output is indicative of a respective score or ranking assigned to each one of the plurality of test cases by the LLM in accordance with the definition of interestingness. The autonomous system may then be fuzz tested by selecting one or more of the plurality of test cases in accordance with the assigned scores or rankings, and executing the selected test case(s) by the autonomous system.

## Description

### FIELD

The present invention relates to fuzz testing autonomous systems. In particular, the present invention relates to obtaining test cases for fuzz testing autonomous systems.

### BACKGROUND

Autonomous systems are used across a wide range of sector, such as transportation, healthcare, and industrial automation. Autonomous systems typically have expansive input spaces. For example, in the case of an autonomous Unmanned Aerial Vehicle (UAV), the vehicle may receive data from various sensors which defines the current state of the vehicle. The sensor data is relayed to an autonomous system in the form of a control algorithm module, which calculates the next actions to be executed by the vehicle. As with any software, it is desirable to test the autonomous system to ensure that it behaves as intended under a range of possible conditions, so that any bugs can be identified and fixed before the system is deployed.

Fuzz testing, sometimes referred to as fuzzing, is a software testing method that involves supplying invalid, unexpected, or random data inputs to a program in order to uncover bugs and vulnerabilities. Fuzzing tools have been developed for autonomous systems, however, these often produce a high volume of ineffective test cases due to the expansive input space of autonomous systems. For example, mutation-based fuzzing tools that traditionally mutate seeds using predefined mutation operations, such as randomly changing the value of a parameter, will typically produce a large number of test cases that do not trigger bug occurrences in the autonomous system. This in turn leads to inefficiency in discovering test cases that give rise to unexpected or undesired system behaviour (e.g. system safety issues).

### SUMMARY

According to a first aspect of the present invention, there is provided a computer-implemented method comprising: receiving a definition of interestingness and a plurality of test cases for fuzz testing an autonomous system; providing first input text and second input text to a Large Language Model, LLM, the first input text comprising the definition of interestingness and the second input text comprising the plurality of test cases; and receiving an output from the LLM, the output being indicative of a respective score or ranking assigned to each one of the plurality of test cases by the LLM in accordance with the definition of interestingness.

In some embodiments according to the first aspect, the computer-implemented method comprises providing third input text to the LLM, the third input text comprising information indicative of the current state of the autonomous system.

In some embodiments according to the first aspect, the computer-implemented method comprises providing fourth input text to the LLM, the fourth input text defining a format in which the LLM should provide said output. For example, in some embodiments the format may require the LLM to provide an explanation of the reasons for assigning the respective score or ranking to each one of the plurality of test cases, such that the output received from the LLM includes said explanation.

In some embodiments according to the first aspect, the computer-implemented method comprises providing fifth input text to the LLM, the fifth input text defining a methodology to be followed by the LLM when assigning the respective score or ranking to each one of the plurality of test cases.

In some embodiments according to the first aspect, the computer-implemented method comprises: automatically selecting one or more of the plurality of test cases according to the respective score or ranking assigned to each one of the plurality of test cases by the LLM; and fuzz testing the autonomous system based on the selected one or more test cases.

In some embodiments according to the first aspect, the computer-implemented method comprises using a test case generator to obtain the plurality of test cases, wherein receiving the plurality of test cases comprising received the plurality of test cases from the test case generator. For example, in some embodiments using the test case generator to obtain the plurality of test cases comprises: selecting one of a plurality of seeds for mutation, each of the plurality of seeds comprising values of a plurality of parameters; and modifying one or more of the values of the selected seed to obtain a mutated seed, wherein the plurality of test cases comprises a plurality of said mutated seeds.

According to a second aspect of the present invention, there is provided a computer program comprising instructions which, when executed by one or more processors, cause said one or more processors to carry out a method according to the first aspect.

According to a third aspect of the present invention, there is provided a non-transitory computer-readable storage medium having stored thereon a computer program according to the second aspect.

According to a fourth aspect of the present invention, there is provided apparatus comprising: the non-transitory computer-readable storage medium according to the third aspect; and one or more processors arranged to execute the computer program stored on said non-transitory computer-readable storage medium.

According to a fifth aspect of the present invention, there is provided apparatus comprising a test case analyser configured to receive a definition of interestingness and a plurality of test cases for fuzz testing an autonomous system, provide first input text and second input text to a Large Language Model, LLM, the first input text comprising the definition of interestingness and the second input text comprising the plurality of test cases, and receive an output from the LLM, the output being indicative of a respective score or ranking assigned to each one of the plurality of test cases by the LLM in accordance with the definition of interestingness.

In some embodiments according to the fifth aspect, the test case analyser is configured to provide third input text to the LLM, the third input text comprising information indicative of the current state of the autonomous system.

In some embodiments according to the fifth aspect, the test case analyser is configured to provide fourth input text to the LLM, the fourth input text defining a format in which the LLM should provide said output. For example, in some embodiments according to the fifth aspect, the format may require the LLM to provide an explanation of the reasons for assigning the respective score or ranking to each one of the plurality of test cases, such that the output received from the LLM includes said explanation.

In some embodiments according to the fifth aspect, the test case analyser is configured to provide fifth input text to the LLM, the fifth input text defining a methodology to be followed by the LLM when assigning the respective score or ranking to each one of the plurality of test cases.

In some embodiments according to the fifth aspect, the test case analyser is configured to automatically select one or more of the plurality of test cases according to the respective score or ranking assigned to each one of the plurality of test cases by the LLM, and the apparatus is configured to fuzz test the autonomous system based on the selected one or more test cases.

In some embodiments according to the fifth aspect, the apparatus comprises a test case generator configured to obtain the plurality of test cases, wherein the test case analyser is configured to receive the plurality of test cases from the test case generator. For example, in some embodiments the test case generator is configured to obtain the plurality of test cases by: selecting one of a plurality of seeds for mutation, each of the plurality of seeds comprising values of a plurality of parameters; and modifying one or more of the values of the selected seed to obtain a mutated seed, wherein the plurality of test cases comprises a plurality of said mutated seeds.

### BRIEF DESCRIPTION OF THE FIGURES

Embodiments of the invention will now be described by way of example only with reference to the figures, in which:
Figure 1 schematically illustrates a system comprising an autonomous system and apparatus for fuzz testing the autonomous system;
Figure 2 schematically illustrates an internal structure of apparatus for fuzz testing an autonomous system;
Figure 3 is a flowchart showing a computer-implemented method of obtaining test cases for fuzz testing an autonomous system; and
Figure 4 schematically illustrates apparatus for performing a computer-implemented method of obtaining test cases for fuzz testing an autonomous system.

### DETAILED DESCRIPTION

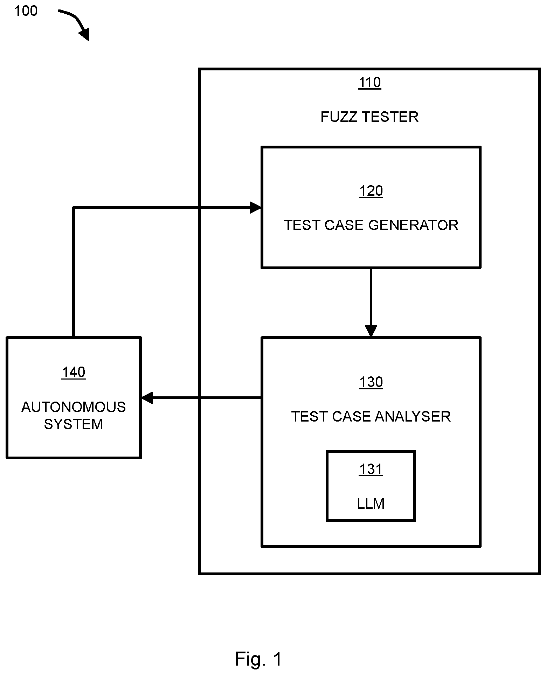

Referring now to Fig. 1, a system 100 comprising an autonomous system 140 and apparatus 110 for fuzz testing the autonomous system 140 is schematically illustrated. The apparatus 110 may be referred to as a 'fuzz tester', 'fuzz testing apparatus', or 'fuzz testing system'.

Depending on the implementation, the autonomous system 140 may comprise a physical embodiment of an autonomous system 140 (e.g. an unmanned aerial vehicle, UAV, or other autonomous vehicle), or may comprise a simulation (e.g. in software or hardware) of an autonomous system 140. References herein to an "autonomous system" 140 should therefore be construed accordingly, as not necessarily implying the physical presence of an autonomous system 140.

In the present embodiment, the fuzz tester 110 comprises a Large Language Model (LLM) 131. For example, the LLM 131 may be stored locally in computer-readable memory of the fuzz tester 110, and/or may be executed locally by one or more processors of the fuzz tester 110. In another embodiment, the LLM 131 may be stored and/or executed remotely. For example, the LLM 131 may run on a remote server, and the fuzz tester 110 may communicate with the server to exchange information with the LLM 131.

The fuzz tester 110 of the present embodiment comprises a test case generator 120 and a test case analyser 130. The test case generator 120 is configured to generate test cases for fuzz testing the autonomous system 140. The test case generator 120 may generate test cases via any suitable method. For example, in some embodiments the test case generator 120 may generate test cases via a mutation-based fuzzing technique, wherein a test case (which may also be referred to as a 'seed') is selected from a seed pool, and is then modified ('mutated') thereby generating a new test case. In other embodiments the test case generator 120 may use a generation-based technique to generate the test cases, in which new test cases are generated from scratch rather than by modifying existing seeds. As yet a further alternative, in some embodiments the test case generator may use a neural network (e.g. an LLM) to generate test cases.

The test case analyser 130 is configured to analyse test cases generated by the test case generator 120, in accordance with a definition of interestingness. The definition of interestingness may be user-defined, for example, inputted by a user via any suitable user interface (UI). Alternatively, the definition of interestingness could be automatically generated, for example, by an LLM (e.g. the LLM 131, or any other suitable LLM). The test case analyser 130 is configured to receive the definition of interestingness, and to receive a plurality of test cases for fuzz testing the autonomous system 140.

The test case analyser 130 may receive the plurality of test cases directly from the test case generator 120, or may receive the test case indirectly (e.g. by retrieving the test cases from common storage accessible to both the test case generator 120 and the test case analyser 130). In the present embodiment the fuzz tester 110 comprises the test case generator 120, but in other embodiments the fuzz tester 110 may be physically separate from (e.g. remote from) the test case generator 120. For example, the test case generator 120 may be implemented in the form of computer program instructions executed on a server, and the fuzz tester 110 (specifically, the test case analyser 130) may communicate with the server to receive the test cases.

The test case analyser 130 is configured to input the definition of interestingness and the test cases to the LLM 131 in the form of text. For example, the test case analyser 130 may provide the definition of interestingness and the test cases to the LLM 131 in the form of a prompt (e.g. a text file) that is capable of being processed by the LLM 131. In some embodiments, the test case analyser 130 may receive the definition of interestingness and/or the test cases in a format that is suitable for processing by the LLM 131, e.g. in the form of text. In such embodiments, the test case analyser 130 may simply forward the definition of interestingness and/or the test cases on to the LLM 131 without modification. In other embodiments, the definition of interestingness and/or the test cases may be received by the test case analyser 130 in another format, and may be converted to a suitable format for the LLM 131 by the test case analyser 130. For example, the test case analyser 130 may be configured to receive the definition of interestingness as user input in the form of audio, and may use a speech-to-text to convert the audio to equivalent text that can be inputted to the LLM 131.

The test case analyser 130 is further configured to receive, from the LLM 131, an output that is indicative of respective rankings assigned to each one of the plurality of test cases by the LLM 131 in accordance with the definition of interestingness. In this way, the test case analyser 130 can utilise the LLM 131 to interpret the test cases and rank them according to whether they are considered likely to produce an interesting result (i.e. "interesting" according to the definition of interestingness).

Depending on the embodiment, the LLM 131 may assign a score or a ranking to each test case. In this context, the term "score" may refer to a score on a particular scale (e.g. 0 to 10, where 0 is the least interesting and 10 is the most interesting), whilst the term "ranking" may refer to a ranking of the test case relative to the other test cases currently being analysed. For example, the LLM 131 may rank the test cases from 1 to n, where *n* is the number of test cases. In some embodiments in which the LLM 131 assigns a score to each test case, it may be possible for more than one test case to be given the same score. In some embodiments in which the LLM 131 assigns a ranking to each test case, each test case may be given a unique ranking among the set of test cases currently being analysed. Alternatively, in some embodiments two or more test cases may be assigned the same ranking, indicating that the two (or more) test cases are considered to be equal in terms of interestingness.

This approach allows the fuzz tester 110 to analyse test cases before they are executed by the autonomous system 140. For example, by selecting test cases that have been deemed more likely to produce an interesting result by the LLM 131 (e.g. test cases that have been assigned a higher ranking, based on the definition of interestingness), it can then be more likely that a selected test case will produce an interesting result once executed by the autonomous system 140. This in turn can reduce the time and effort (e.g. in terms of computing resources) required to uncover bugs in the autonomous system, making the fuzz tester 110 more efficient compared to conventional approaches for fuzz testing autonomous systems.

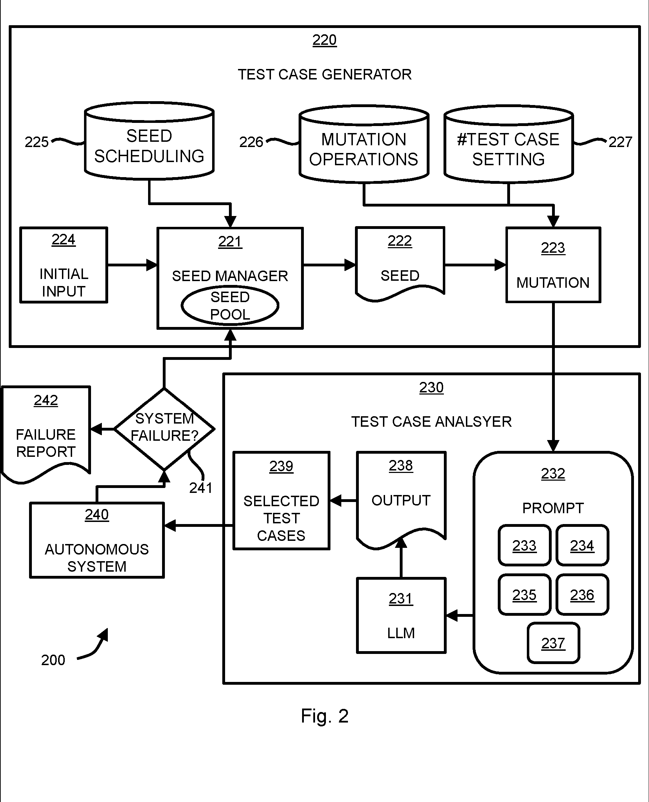

Referring now to Fig. 2, an internal structure of apparatus for fuzz testing an autonomous system is schematically illustrated. The structure illustrated in Fig. 2 is one example of an implementation of the fuzz tester 110 of Fig. 1. As such, features and variants discussed above in relation to Fig. 1 may be equally applicable to the embodiment of Fig. 2.

Like the fuzz tester 110 of Fig. 1, the apparatus of the present embodiment comprises a test case generator 220 and a test case analyser 230. As with the embodiment of Fig. 1, the test case generator 220 and test case analyser 230 of Fig. 2 may collectively be referred to as a 'fuzz tester', 'fuzz testing apparatus', or 'fuzz testing system'.

The test case analyser 230 illustrated in Fig. 2 comprises an LLM 231. However, in some embodiments the LLM 231 may be stored and/or executed remotely, as described above with reference to Fig. 1. The test case analyser 230 is configured to provide a prompt 232 to the LLM 231 that comprises information to assist the LLM 231 in analysing and ranking the test cases.

Examples of types of information that can be included in the prompt 232 will now be described in more detail, with reference to a specific implementation in which the autonomous system 240 is a UAV. It should be appreciated that a UAV is described here purely by way of an example to assist in understanding the present inventive concept, and should not be construed as limiting. The principles disclosed herein may be equally applicable when fuzz testing other types of autonomous system (i.e. systems other than UAVs).

The prompt 232 comprises first input text 233 and second input text 234. The first input text comprises the definition of interestingness, and the second input text comprises the plurality of test cases (e.g. test cases that have been received from the test case generator 220). As described above with reference to Fig. 1, the definition of interestingness may be user-defined or may be generated automatically (e.g. by another LLM) without user involvement.

For example, when fuzz testing an autonomous system 240 to try to identify bugs that have potential to breach safety requirements, the definition of interestingness may take into account the safety specification of the autonomous system 240. In other words, some test cases may be deemed more "interesting" than others due to their potential to breach safety requirements. This interestingness may be defined in terms of an expected behaviour of the autonomous system 240 that would violate the safety specification. The scope of this definition can vary from broad objectives, such as causing a control system crash, to more specific scenarios.

In the present example of a UAV, the definition of interestingness may stipulate that the UAV must maintain a minimum distance (e.g. 1.5 meters) from obstacles, to prevent or reduce the risk of collisions. An example of first input text 233 comprising a definition of interestingness in this context is as follows:
*#Definition of Interestingness: The UA V's collision avoidance system will control the UA V to take off from its starting position, fly to the coordinates (-5, 55), and then return to a position where y=0. An interesting mutant can cause the system to fail to guide the drone away from obstacles, resulting in collisions or the UAV coming within 1.5 metres of obstacles.*

The second input text 234 comprises the plurality of test cases that are to be evaluated by the LLM 231. In the present embodiment, the fuzz tester comprises a test case generator 220 configured to generate test cases for fuzz testing the autonomous system 240. In the present embodiment, the test case generator 220 is configured to use a mutation-based technique to generate the test cases, and hence the test cases in the present embodiment can also be referred to as "mutants". In other embodiments, the test case generator 220 may be omitted and the test case analyser 230 may be configured to obtain the test cases from another source, e.g. from a remote source such as a server. An example of the second input text 234 that is provided to the LLM 231 by the test case analyser 230 is as follows:

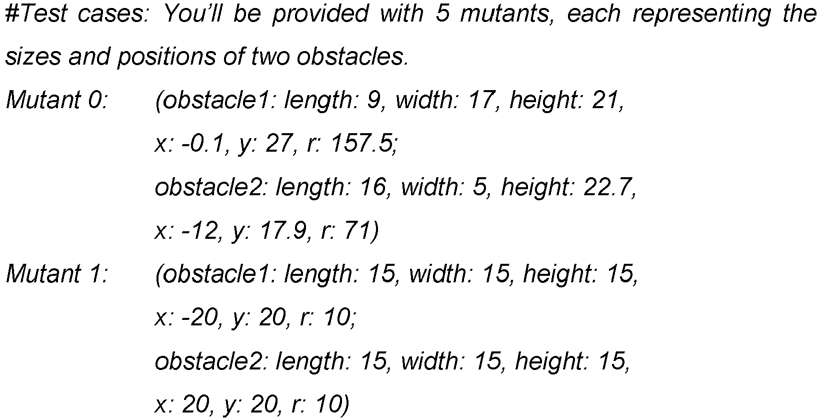

For brevity, the above example only shows the details for two mutants (mutant 0 and mutant 1). However, as indicated by the ellipsis above, in practice the second input text 234 of the present example would also include definitions of three further mutants, since the first sentence informs the LLM 231 that five mutants will be provided. The number of test cases used here (five) is purely one example, and in general, in other embodiments the prompt 232 may provide the LLM 231 with any number of test cases.

In addition to defining the test cases ("mutants" in the present embodiment), in some embodiments the second input text 232 may include an explanation of what each mutant represents, to assist the LLM in accurately understanding each test case. In the example shown above, the second input text 232 informs the LLM that each mutant represents the sizes and positions of two obstacles.

The prompt 232 may further comprise third input text 235, comprising information indicative of the current state of the autonomous system 240. Here, the current state of the system may refer to the initial condition (real or hypothetical) of the autonomous system 240 for the purpose of analysing the test cases. For instance, when testing a UAV control system, the current system state might include details such as the current location of the UAV and additional parameters such as Global Positioning System (GPS) coordinates or pitch angle. An example of the third input text 235 that may be provided to the LLM 231 by the test case analyser 230 is as follows:

### #Current system state: The UA V is currently at coordinates (0, 0)

In some embodiments, the LLM 231 may be provided with information about the current state of the system in the definition of interestingness, in which case it may not be necessary to provide separate input relating to the current system state (i.e. the third input text 235). For instance, taking the example of the definition of interestingness given above, the definition could be modified to say "control the UAV to take off from its starting position (0, 0)", thereby informing the LLM 231 that the initial state (i.e. the current system state) of the UAV is at coordinates (0, 0). However, separating out the current system state from the definition of interestingness (i.e. by providing separate first input text and third input text as described above) has the advantage that the LLM 231 can more reliably distinguish between the current system state and the definition of interestingness, reducing the risk of hallucinations in the output 238 produced by the LLM 231. Such an approach may be particularly advantageous in embodiments where the information needed to define the current system state is extensive, making it complex for the LLM 231 to distinguish between the two types of information and predict the future system state.

The prompt 232 may further comprise fourth input text 236 defining a format in which the LLM 231 should provide said output. This can assist when interpreting the output and selecting (e.g. automatically or manually) one or more of the test cases for subsequent execution by the autonomous system 240. Defining the output format in this way, in particular by requiring the LLM 231 to produce an interpretation, can help to ensure that the LLM 231 correctly follows a Chain of Thoughts (CoT) approach and in turn can help to reduce the risk of hallucinations in the output 238 produced by the LLM 231. The CoT approach is described in more detail below, with reference to an example of fifth input text 237 defining a methodology to be followed by the LLM. An example of the fourth input text 236 that may be provided to the LLM 231 by the test case analyser 230 is as follows:

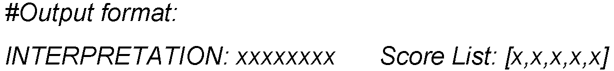

In the present embodiment, the format defined by the fourth input text 236 requires the LLM 231 to provide an explanation of the reasons for assigning the respective score or ranking to each one of the plurality of test cases, such that the output received from the LLM includes said explanation. This is denoted by the term "INTERPRETATION", which defines a portion of the output in which the LLM 231 should include its reasoning in relation to each test case (i.e. an explanation as to why that test case has been assigned a particular score/ranking).

The prompt 232 may further comprise fifth input text 237 defining a methodology to be followed by the LLM when assigning the respective score or ranking to each one of the plurality of test cases. In the present embodiment, the test case analyser 230 employs the Chain of Thoughts (CoT) approach to customise the LLM 231 output format. This approach instructs the LLM 231 to interpret the meaning of each mutant, and then evaluate how each mutant will impact the current system state. The LLM 231 should produce a brief explanation for each thought process and assign a score to each mutant. In the present embodiment, the LLM 231 is instructed to assign each test case a score from 0 to 10, where 10 indicates that the test case is the most interesting, meaning it is highly likely to meet the test conditions outlined in the definition of interestingness after execution, while a score of 0 signifies the opposite (i.e. least interesting). An example of the fifth input text 237 that may be provided to the LLM 231 by the test case analyser 230 is as follows:
*#Methodology: The output should follow these chains of thought: First, understand the positions of the obstacles in the test cases*, *and analyze the potential flight paths of the UAV under each test case (under the heading "INTERPRETATION", in all caps). Then score each test case*, *with 10 points being the most interesting and 0 points being the least interesting. All scores will be stored in a list in the order of test case IDs and this list will be outputted (under the heading 'Score List').*

Finally, in the present embodiment the various input texts are combined together in a prescribed format to produce the prompt 232. In the present embodiment the prompt includes a brief explanation of the objective, to assist the LLM 231 in scoring or ranking the test cases. An example of the prompt 232 that is provided to the LLM 231 by the test case analyser 230 in the present embodiment is as follows:
*Prompt: We are testing an autonomous system. You will serve as a predictor to determine which mutant is the most interesting. **#Definition of Interestingness #Current System State #Test cases #Methodology #Output format***

As explained above, in the present embodiment the test case analyser 230 instructs the LLM 231 to provide insights (the "interpretation") for each test case in its output 238, as defined in examples of the fourth and fifth input texts 236, 237 given above. In the present embodiment, the LLM 231 assesses obstacle positions in the environment and evaluates how proximity to waypoints might impact the avoidance system of UAV. An example of the output produced by the LLM 231 is as follows:

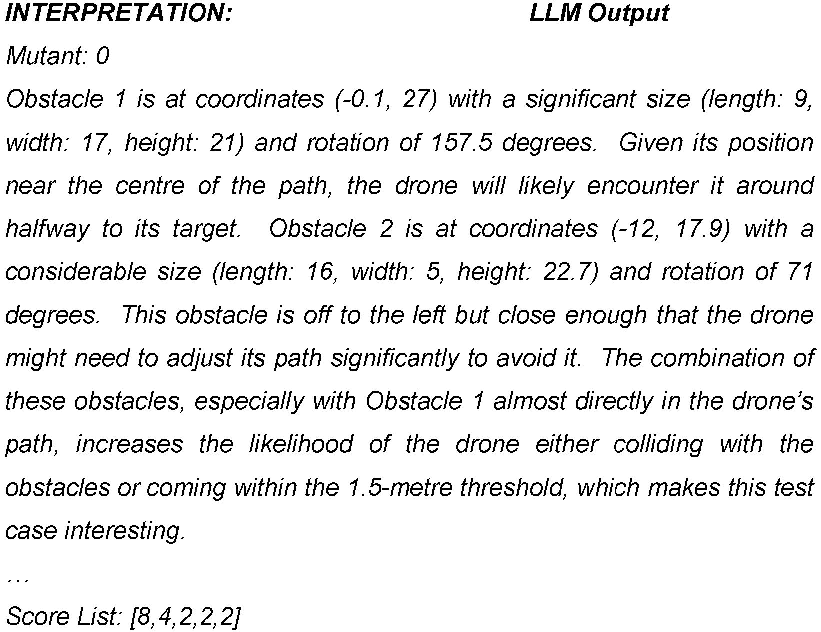

For brevity, the above example only shows the interpretation for the first mutant (mutant 0). However, as indicated by the ellipsis above, in practice the output 238 of the present example would also include definitions of four further mutants, since in the present example the LLM 231 is provided with five mutants.

As shown in Fig. 2, in the present embodiment the test case analyser 230 is further configured to select one or more of the plurality of test cases according to the respective score or ranking assigned to each one of the plurality of test cases by the LLM 231. In the present embodiment the test case analyser 230 is configured to automatically select one or more of the plurality of test cases based on the output 238 without user involvement. For example, the test case analyser 230 may be configured to select a predefined number (e.g. 1, 2, 3 etc.) of the test cases that have the highest score(s) or ranking(s) among the test cases included in the outpour 238, or may be configured to select any test cases that have a score above a certain threshold for interestingness. In other embodiments the selection may be made manually, for example, the test case 230 may be configured to make the selection in response to user input indicating which test case(s) have been selected by a user.

After selecting one or more of the test cases, the autonomous system 140, 240 is fuzz tested based on the selected one or more test cases 239. In other words, the autonomous system 140, 240 is controlled to execute the selected one or more test cases.

In the present embodiment, the test case generator 220 is configured to use a mutation-based method to generate the plurality of test cases that are sent to the test case analyser 230. A method of generating the plurality of test cases by the test case generator 220 will now be briefly described.

The test case generator 220 comprises a seed manager 221, which is configured to select one or more seeds 222 for mutation, each of the plurality of seeds comprising respective values of a plurality of parameters (e.g. sizes and positions of obstacles, in the UAV example described above). The seed manager 221 may be configured to randomly select the one or more seeds 222 from the seed pool, or may be configured to select the one or more seeds 222 based on a predefined seed scheduling strategy 225. The one or more seeds 222 are selected from a "seed pool", which may be stored locally in the test case generator 220 or may be stored in remote memory accessible to the seed manager 221. The seed pool may be initially populated with an input 224 comprising randomly selected/generated test cases.

Then, the test case generator 220 is configured to apply a mutation 223 to the selected one or more seeds 222, to obtain one or more respective mutated seeds. In this context, "mutation" refers to modifying one or more of the values of the selected seed(s) 222. The mutation step may involve one or more predefined mutation operations 226, such as randomly changing a value of parameter in the test case. A plurality of mutated seeds obtained in this way are then provided to the test case analyser 230, as the plurality of test cases. In some embodiments, the test case generator 220 may be configured with a "number of test case setting", which controls the number of new test cases that are generated at each step by test case generator 220.

Once a mutated seed has been selected by the test case analyse 230 and executed by the autonomous system 240, in the present embodiment it is then checked whether the test case resulted in a system failure 241. The definition of a system failure may depend on the objective of the fuzz testing, for example, the violation of some safety property. If a system failure 241 is detected, the apparatus 200 may be configured to generate a report comprising details of the failure (e.g. information about the type of failure that occurred, and/or information about the test case that caused the failure). In some embodiments, if the mutant (i.e. a mutated test case) does not result in a system failure 241, the seed manager 221 may be configured to update the seed pool, for example, by replacing the original test case (i.e. the corresponding seed 222 that was previously selected from the seed pool) with the new one. The updated seed pool can then be used when generating the next batch of test cases.

In some embodiments, the seed manager 221 may be further configured to update the seed pool in accordance with the scores and/or rankings assigned by the LLM 231. For example, for any test case that is given a score or ranking below a certain threshold, the seed manager 221 may be configured to remove the corresponding seed from the seed pool or decrease its selection probability. This approach takes into account the fact that test cases that have been given low scores or rankings by the LLM 231 may be less likely to produce an interesting result (e.g. a system failure) when executed by the autonomous system 240, and hence removing the corresponding seed from the seed pool or decrease its selection probability can reduce the chances of similarly uninteresting test cases being generated in future, leading to a further improvement in efficiency.

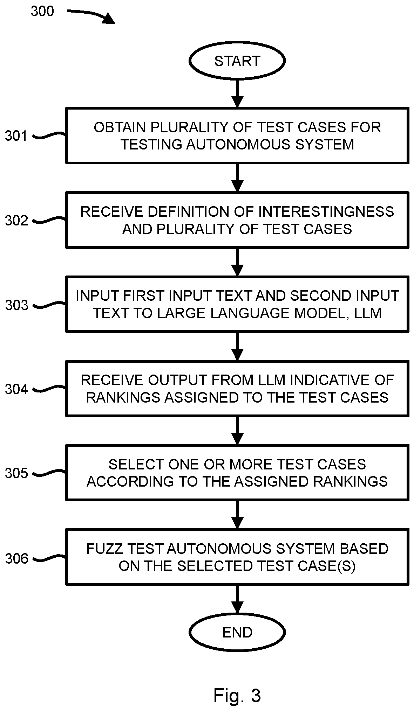

Referring now to Fig. 3, a flowchart is illustrated showing a computer-implemented method performed by a fuzz tester. The steps illustrated in Fig. 3 may correspond to functions performed by the test case generators 120, 220 and test case analysers 130, 230 described above with reference to Figs. 1 and 2.

First, in step 301 a plurality of test cases are obtained by the test case generator 120, 220. For example, when the test case generator 120, 220 is configured to use a mutation-based technique to generate new test cases, obtaining the test cases in step 301 may comprise selecting one of a plurality of seeds for mutation, each of the plurality of seeds comprising values of a plurality of parameters, and modifying one or more of the values of the selected seed to obtain a mutated seed, wherein the plurality of test cases comprises a plurality of said mutated seeds. In some embodiments, the fuzz tester 110 may be configured to receive test cases from an external source, e.g. a remote server, in which case step 301 may be omitted (i.e. not performed by the apparatus 100, 200).

Next, in step 302 a definition of interestingness and a plurality of test cases are received, and in step 303 the first input text and second input text are provided to the LLM 131, 231. As described above with reference to Figs. 1 and 2, the first input text comprises the definition of interestingness and the second input text comprises the plurality of test cases. Depending on the embodiment, step 303 may also include providing third, fourth, and/or fifth input text to the LLM 131, 231, as described above with reference to Fig. 2.

Next, in step 304 the output is received from the LLM 131, 231. The output is indicative of a respective score or ranking assigned to each one of the plurality of test cases by the LLM in accordance with the definition of interestingness.

Then, in step 305 the test case analyser 130, 230 selects (e.g. automatically selects) one or more of the plurality of test cases according to the respective score or ranking assigned to each one of the plurality of test cases by the LLM 131, 231. Then, in step 306 the autonomous system 140, 240 is fuzz tested based on the selected one or more test cases. In other words, in step 306 the autonomous system 140, 240 is controlled to execute the selected one or more test cases.

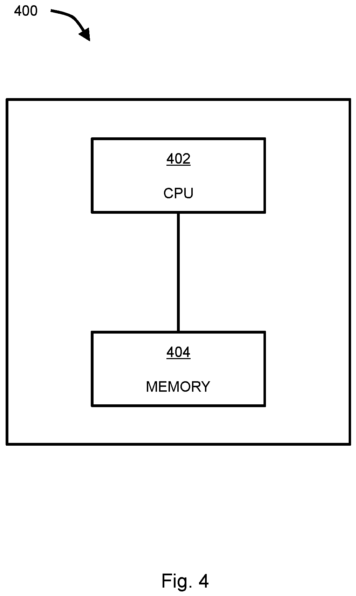

Referring now to Fig. 4, apparatus for performing a computer-implemented method of obtaining one or more test cases for fuzz testing an autonomous system 140, 240 is schematically illustrated, according to an embodiment of the present invention. The apparatus 400 may be employed as the test case generator 120, 220 and/or as the test case analyser 130, 230 of Figs. 1 and 2, when a software implementation is used.

The apparatus 400 comprises one or more processors 402. The one or more processors 402 may, for example, comprise a general-purpose processor. The one or more processors 402 may be a single core device or a multiple core device. The one or more processors 402 may comprise a Central Processing Unit (CPU) or a graphical processing unit (GPU). Alternatively, the one or more processors 402 may comprise specialised processing hardware, for instance a Reduced Instruction Set Computer (RISC) processing unit or programmable hardware with embedded firmware. Multiple processors 402 may be included.

The apparatus 400 comprises a memory 404. The memory 404 may comprise a working or volatile memory. The one or more processors 402 may access the volatile memory in order to process data and may control the storage of data in memory. The volatile memory may comprise Random Access Memory (RAM) of any type, for example GPU RAM, Static RAM (SRAM), Dynamic RAM (DRAM), or it may comprise Flash memory, such as an SD-Card.

The memory 404 may comprise a non-volatile memory, which may also be referred to as non-transitory memory. The non-volatile memory stores a set of operating instructions for controlling the operation of the one or more processors 402 in the form of computer-readable instructions. The non-volatile memory may be any kind of non-transitory computer-readable storage medium, such as a Read Only Memory (ROM), a Flash memory or a magnetic drive memory.

The one or more processors 402 are configured to execute operating instructions to cause the apparatus 400 to perform any of the methods described herein, for example a method such as the one described above with reference to Fig. 3. The operating instructions may comprise code (i.e. drivers) relating to the hardware components of the apparatus 400, as well as code relating to the basic operation of the apparatus 400. Generally speaking, the one or more processors 402 execute one or more instructions of the operating instructions, which are stored permanently or semi-permanently in the non-volatile memory, using the volatile memory to temporarily store data generated during execution of said operating instructions.

Embodiments of the present invention have been described in which test cases for fuzz testing an autonomous system 140, 240 are analysed prior to being executed by the autonomous system 140, 240. In particular, the analysis aims to identify test cases that are deemed more interesting, in other words, more likely to produce a system failure when executed by the autonomous system 140, 240.

To test the effectiveness of this approach, three fuzzing tools (referred to here as Fuzz#1, Fuzz#2, and Fuzz#3, were evaluated both with and without the above-described analysis prior to test cases being executed. Each fuzzing tool was tasked with testing a UAV avoidance system, in a scenario where the UAV navigates missions (identified as mission 1 through to mission 6) in a virtual environment under the control of the avoidance system. Each mission varied only in specific waypoints, requiring the system to guide the drone through them in sequence.

The objective was to generate as many valid test cases as possible. A test case defines the size and coordinates of obstacles in the environment and is considered valid if the UAV either collides with an obstacle or comes too close. In other words, each valid test case represents a unique scenario that causes the UAV mission to fail. The number of valid test cases generated by the modified tools (denoted with an asterisk after the tool name, e.g. Fuzz#1*) were then compared to those produced by the original tools, as shown by the results in Table I below:

**TABLE I**

| **Tool** | **Number of valid test cases** | | | | | |
|---|---|---|---|---|---|---|
| | Mission 1 | Mission 2 | Mission 3 | Mission 4 | Mission 5 | Mission 6 |
| Fuzz#1 | 2 | 10 | 8 | 4 | 0 | 5 |
| Fuzz#1 * | 17 | 15 | 8 | 10 | 25 | 22 |
| Fuzz#2 | 7 | 9 | 0 | 1 | 6 | 10 |
| Fuzz#2 * | 11 | 11 | 2 | 3 | 6 | 11 |
| Fuzz#3 | 2 | 15 | 11 | 7 | 18 | 20 |
| Fuzz#3 * | 5 | 15 | 18 | 7 | 20 | 21 |

As shown by the results in Table I, the effect of analysing test cases in the test case analyser 130, 230 prior to their execution by the autonomous system 140, 240 was to increase the ability of tools Fuzz#1, Fuzz#2 and Fuzz#3 to generate test cases that caused system violations increased by 234.5%, 33.3%, and 17.8%, respectively.

Whilst certain embodiments of the invention have been described herein with reference to the drawings, it will be understood that many variations and modifications will be possible without departing from the scope of the invention as defined in the accompanying claims.

## Claims

1. A computer-implemented method comprising:
receiving a definition of interestingness and a plurality of test cases for fuzz testing an autonomous system;
providing first input text and second input text to a Large Language Model, LLM, the first input text comprising the definition of interestingness and the second input text comprising the plurality of test cases; and
receiving an output from the LLM, the output being indicative of a respective score or ranking assigned to each one of the plurality of test cases by the LLM in accordance with the definition of interestingness.

2. The computer-implemented method according to claim 1, comprising:
providing third input text to the LLM, the third input text comprising information indicative of the current state of the autonomous system.

3. The computer-implemented method according to claim 1 or claim 2, comprising:
providing fourth input text to the LLM, the fourth input text defining a format in which the LLM should provide said output.

4. The computer-implemented method according to claim 3, wherein the format requires the LLM to provide an explanation of the reasons for assigning the respective score or ranking to each one of the plurality of test cases, such that the output received from the LLM includes said explanation.

5. The computer-implemented method according to any one of claims 1 to 4, comprising:
providing fifth input text to the LLM, the fifth input text defining a methodology to be followed by the LLM when assigning the respective score or ranking to each one of the plurality of test cases.

6. The computer-implemented method according to any one of claims 1 to 5, comprising:
automatically selecting one or more of the plurality of test cases according to the respective score or ranking assigned to each one of the plurality of test cases by the LLM; and
fuzz testing the autonomous system based on the selected one or more test cases.

7. The computer-implemented method according to any one of claims 1 to 6, comprising:
using a test case generator to obtain the plurality of test cases, wherein receiving the plurality of test cases comprising received the plurality of test cases from the test case generator.

8. The computer-implemented method according to claim 7, wherein using the test case generator to obtain the plurality of test cases comprises:
selecting one of a plurality of seeds for mutation, each of the plurality of seeds comprising values of a plurality of parameters; and
modifying one or more of the values of the selected seed to obtain a mutated seed,
wherein the plurality of test cases comprises a plurality of said mutated seeds.

9. A computer program comprising instructions which, when executed by one or more processors, cause said one or more processors to carry out a method according to any one of claims 1 to 8.

10. A non-transitory computer-readable storage medium having stored thereon a computer program according to claim 9.

11. Apparatus comprising:
the non-transitory computer-readable storage medium according to claim 10; and
one or more processors arranged to execute the computer program stored on said non-transitory computer-readable storage medium.

12. Apparatus comprising:
a test case analyser configured to receive a definition of interestingness and a plurality of test cases for fuzz testing an autonomous system, provide first input text and second input text to a Large Language Model, LLM, the first input text comprising the definition of interestingness and the second input text comprising the plurality of test cases, and receive an output from the LLM, the output being indicative of a respective score or ranking assigned to each one of the plurality of test cases by the LLM in accordance with the definition of interestingness.

13. The apparatus according to claim 13, wherein the test case analyser is configured to provide third input text to the LLM, the third input text comprising information indicative of the current state of the autonomous system.

14. The apparatus according to claim 12 or claim 13, wherein the test case analyser is configured to provide fourth input text to the LLM, the fourth input text defining a format in which the LLM should provide said output.

15. The apparatus according to claim 14, wherein the format requires the LLM to provide an explanation of the reasons for assigning the respective score or ranking to each one of the plurality of test cases, such that the output received from the LLM includes said explanation.
